# FASCICULE DE BREVET EUROPEEN

(11) **EP 0 670 556 B1**
(45) Date de publication et mention de la délivrance du brevet: **06.09.2000**
(21) Numéro de dépôt: 95400476.8
(22) Date de dépôt: 03.03.1995
(51) Int. Cl.: G06K 7/06, G06K 17/00

(54) **Dispositif portable pour mise en liaison fonctionnelle d'une carte à puce avec une unité centrale**
Tragbare Vorrichtung für funktionelle Verbindung zwischen einer IC-Karte und einer Zentraleinheit
Portable device for functional link between an IC card and a central unit

(30) Priorité: 04.03.1994 FR 9402530
(43) Date de publication de la demande: 06.09.1995
(73) Titulaire: GEMPLUS CARD INTERNATIONAL, 13420 Gémenos (FR)
(72) Inventeur: Gloton, Jean-Pierre, F-94230 Cachan (FR)
(74) Mandataire: Schmit, Christian Norbert Marie

(56) Documents cités:
- EP-A- 0 202 622
- EP-A- 0 533 542
- WO-A-90/04239

## Description

La présente invention se rapporte aux lecteurs portables qui permettent d'établir une liaison entre une carte dite "à puce" et une unité centrale fixe, notamment pour effectuer des transactions telles que des paiements par exemple.

Les cartes à puce permettant d'effectuer directement des transactions de paiement, soit en francs, soit en unités de compte telles que des unités téléphoniques par exemple, sont bien connues. Elles comprennent une puce fixée dans une carte en plastique de dimensions normalisées et munie d'un connecteur lui-même normalisé qui permet, par l'intermédiaire d'une connexion électrique, d'établir les liaisons souhaitées avec une unité-centrale d'un lecteur et permettant par exemple de valider un paiement ou d'établir une communication téléphonique.

On connaît aussi des cartes comprenant un certain nombre de circuits électroniques, dont au moins une puce, et qui permettent par l'intermédiaire d'une liaison inductive ou radioélectrique d'établir une communication, afin par exemple d'activer l'ouverture d'un portillon de contrôle d'entrée dans un lieu surveillé tel que les locaux d'une entreprise, ou d'autoriser le paiement d'une prestation de service telle que le droit de péage d'une autoroute. Ces cartes sont généralement de mêmes dimensions que les cartes à puce usuelles mais elles sont plus épaisses, pour pouvoir loger tous les circuits nécessaires, et elles ne comportent pas de connecteur puisque la liaison s'effectue sans contact.

On connaît enfin les postes téléphoniques sans fil utilisés dans les systèmes de radiotéléphone cellulaires et qui sont en eux-mêmes banalisés. La personnalisation de ces postes, pour éviter des problèmes de vols et de fraudes, s'effectue souvent par l'intermédiaire d'une carte à puce, généralement du type standard, permettant de communiquer au poste téléphonique les codes nécessaires à son fonctionnement et à l'identification de l'utilisateur.

De nombreux essais sont effectués actuellement pour généraliser l'usage des cartes à puce dans un grand nombre d'utilisations, en particulier dans un grand nombre de situation qui demandent le paiement d'un droit quelconque, péage, parking, entrée dans un centre sportif. Compte tenu des conditions d'emplois différentes et des exigences particulières des débiteurs, ceci amène à multiplier le nombre de cartes. Aussi d'ores et déjà un particulier peut avoir transporter sur lui jusqu'au moins cinq cartes : une carte bancaire, une carte téléphonique, une carte d'accès à son lieu de travail, une carte de péage d'autoroute et une carte de téléphone cellulaire. S'il est amené à fréquenter plusieurs établissements pour son travail et à emprunter des réseaux d'autoroutes différents, le nombre de cartes à transporter croît de manière importante, ce qui devient rapidement gênant et finit par faire regretter l'argent liquide.

Des tentatives diverses pour palier cette prolifération des cartes spécifiques sont actuellement en cours, dont certaines sont connues sous le nom de "porte-monnaie électronique". Les solutions envisagées jusqu'à présent ne résolvent toutefois que partiellement ce problème de prolifération. Il subsiste tout particulièrement le problème d'utiliser plusieurs types différents de liaisons, car il parait presque impossible de les ramener à un seul type en raison des applications diverses amenant des contraintes particulières. Une carte unique adaptée à tous ces types de liaison serait a priori d'un encombrement monstrueux, ce qui, outre les désagréments apportés par cet encombrement, empêcherait de l'utiliser dans la plupart des lecteurs actuels de cartes à puce.

WO-A-90/04239 divulgue un dispositif portable pour mise en liaison fonctionnelle d'une carte à puce avec une unité centrale, ce dispositif comportant un boîtier destiné à recevoir la carte à puce, des moyens pour permettre à ce boîtier d'une part de dialoguer avec la puce de la carte et d'autre part d'établir une liaison entre le boîtier et l'unité centrale pour mettre la puce de la carte en liaison fonctionnelle avec cette unité centrale. La liaison entre le boîtier et l'unité centrale est réalisée par un de plusieurs types de liaison physique différents qui est choisi selon des applications.

Pour résoudre ce problème, l'invention propose un dispositif portable pour mise en liaison fonctionnelle d'une carte à puce avec une unité centrale, du type comportant un boîtier destiné à recevoir la carte à puce, des moyens pour permettre à ce boîtier d'une part de dialoguer avec la puce de là carte et d'autre part d'établir une liaison entre le boîtier et l'unité centrale pour mettre la puce de la carte en liaison fonctionnelle avec cette unité centrale, ce dispositif comporte en outre :
- des moyens de liaison entre le boîtier et l'unité centrale appartenant à au moins deux types de liaison physique différents;
- des moyens de détection pour reconnaître le type de liaison physique permettant de mettre en communication le boîtier et l'unité centrale en fonction de l'application contenu dans la carte à puce, ces moyens de détection étant adaptés pour lire dans la puce de la carte une information déterminant le type de liaison physique à utiliser; et
- des moyens d'aiguillage pour sélectionner les moyens de liaison correspondant au type de liaison physique ainsi détecté.

Selon une autre caractéristique, les moyens de détection permettent de détecter les signaux émis par l'unité centrale pour déterminer le type de liaison physique à utiliser, compte tenu des informations correspondant à ce type de liaison éventuellement contenues dans la puce de la carte.

Selon une autre caractéristique, les moyens de sélection permettent de commander la mise en sommeil du boîtier afin de limiter sa consommation d'énergie, et les moyens de détection permettent d'activer les moyens de sélection pour remettre en service le boîtier lors de la détection du signal provenant de l'unité centrale.

Selon une autre caractéristique, le dispositif comprend au moins un organe de commande permettant de sélectionner manuellement le type de liaison à utiliser.

Selon une autre caractéristique, les moyens de sélection permettent de détecter la présence de la carte à puce dans le boîtier, afin de n'autoriser le fonctionnement du boîtier que si cette carte à puce est présente.

D'autres particularités et avantages de l'invention apparaîtront clairement dans la description suivante, présentée à titre d'exemple non limitatif en regard des figures annexées, qui représentent :
- la figure 1, une vue schématique en perspective d'un lecteur selon l'invention, accompagnée d'une carte à puce destinée à être placée dans ce lecteur, et d'une unité centrale destinée à lui être reliée; et
- la figure 2, un schéma électronique simplifié des circuits du lecteur de la figure 1.

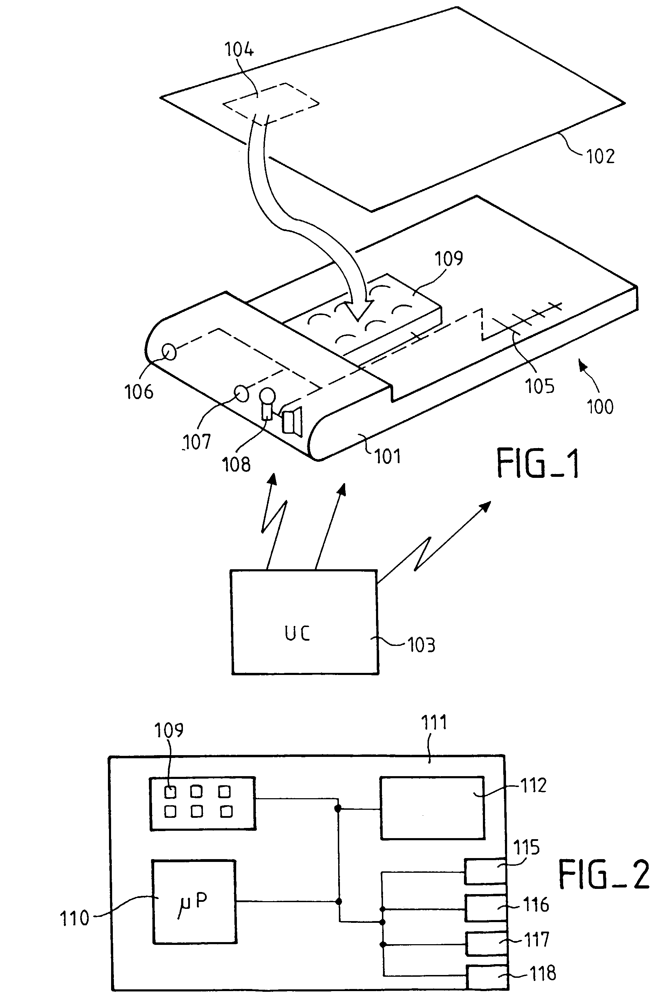

Le dispositif 100 selon l'invention, représenté sur la figure 1 comprend un boîtier 101 susceptible de recevoir une carte à puce 102 et de communiquer avec une unité centrale 103.

Cette unité centrale 103 est de tout type courant permettant de recevoir des messages et d'en émettre pour établir un dialogue avec le boîtier 101 de manière à obtenir les actions souhaitées. Les actions peuvent être de types très variables, par exemple l'ouverture d'un portillon dans le cas d'un contrôle d'accès, le contrôle du passage d'une voiture dans le cas d'un péage d'autoroute, ou le débit d'un compte par exemple pour accéder à un centre sportif.

Les différentes autorisations, codes de contrôle, mémoires de débit etc., sont contenues dans la puce 104 située dans la carte 102. Le cas échéant, cette carte peut être dédiée à une seule application ou à plusieurs d'entre elles.

Comme cela est bien connu, et pour différentes raisons, soit liées aux nécessités physiques de l'application, soit de pure convenance du concepteur, l'unité centrale 103 possède des moyens de communication avec le boîtier 101 qui peuvent être de natures diverses. On citera par exemple les liaisons radioélectriques, par ondes acoustiques sonores ou ultrasonores, et les liaisons optiques par infrarouge. Le boîtier peut même être électriquement connecté à l'unité centrale 103 par des connexions galvaniques.

Afin de permettre d'utiliser un boîtier de liaison 101 unique avec toute une variété d'unités centrales 103, l'invention propose de munir ce boîtier d'au moins deux moyens différents de liaison physique avec l'unité centrale. Dans l'exemple représenté, le boîtier 101 est muni d'une antenne d'émission-réception radiofréquence 105, d'une diode infrarouge 106 émettrice et réceptrice (éventuellement une diode émettrice et une diode réceptrice séparées), d'un quartz piézo-électrique 107 pouvant émettre et recevoir des ultrasons, et d'un ensemble microphone plus haut parleur 108 pouvant émettre et recevoir des ondes acoustiques à fréquence vocale.

Le boîtier peut ainsi physiquement communiquer avec au moins quatre types d'unités centrales 103 par des liaisons radioélectriques, infrarouges, ultrasonores et acoustiques à fréquence vocale.

La carte 102 vient se placer dans un logement approprié du boîtier où elle est maintenue par des moyens appropriés, tels qu'une échancrure munie d'un ressort, de manière à ce que le connecteur de la puce 104 vienne s'accoupler à un connecteur 109 faisant partie du boîtier 101 et relié à des moyens d'adaptation aux différents organes de liaison 105 à 108.

Le boîtier 101 contient tous les moyens nécessaires pour faire fonctionner les différents organes de liaison 105 à 108, ainsi que des moyens de sélection de ces organes reliés au connecteur 109, qui travaillent en liaison avec les informations provenant de la puce 104.

L'organisation des circuits contenus à l'intérieur du boîtier 101 est représentée de manière schématique sur la figure 2, sur laquelle l'ensemble de ces circuits est contenu dans un bloc 111.

Le connecteur 109 est relié à un microprocesseur 110 qui permet de gérer l'ensemble des organes du boîtier à l'aide d'un programme adéquat qui permet de mettre en oeuvre de manière logique les différentes fonctions décrites dans ce texte. Ce connecteur et ce microprocesseur sont réunis par des liaisons de type bus à un circuit de détection 112 et à des circuits de liaisons 115 à 118.

Les circuits de liaison 115 à 118 comprennent à la fois les moyens de liaison 105 à 108 et les organes d'adaptation, connus en eux-mêmes, permettant aussi bien de générer les signaux d'alimentation de ces organes 105 à 108 à partir des signaux logiques d'émission reçus du microprocesseur, que de traiter les signaux de réception de ces organes pour délivrer des signaux logiques de réception à destination du microprocesseur.

Ces signaux émis et reçus par le microprocesseur correspondent à ceux nécessaires pour établir la liaison avec l'unité centrale 103 selon les séquences logiques prescrites et qui sont élaborées et traitées aussi bien dans le microprocesseur 110 que dans la puce 104 selon les normes définies pour les applications particulières à gérer. Dans le cas le plus simple toute l'intelligence de l'application sera contenue dans la puce 104 et le microprocesseur 110 se contentera de gérer les circuits de liaison 115 à 118 selon les indications fournies par la puce 104.

La sélection entre chacune des liaisons, ici au nombre de 4, se fait sous la commande du microprocesseur 110 qui envoie sur le bus de liaison des ordres adéquats qui sont interprétés par la liaison qui doit être activée.

Cette sélection peut se faire de différentes manières:

La manière la plus simple consiste à prévoir une carte à puce par type d'unité centrale et à prévoir dans la mémoire de la puce de la carte les indications de type du liaison à utiliser. Ces indications seront décodées par le microprocesseur 110 lorsque la connexion sera établie entre le connecteur de la puce et le connecteur 109 du boîtier. Le microprocesseur sélectionnera alors celle des liaisons correspondant à l'application contenue dans la puce. Ce décodage constitue donc la détection. Un autre type de sélection est purement électromécanique. Par exemple la carte possède un bossage ou une cavité qui, mis en correspondance d'un relai électromécanique du boîtier, sélectionne un type de liaison particulier au moment même ou la carte est placée dans le boîtier.

Un autre type de sélection consiste encore à utiliser un circuit de détection 112 qui permet de déterminer le type de liaison et d'adresser au microprocesseur 110 un signal indiquant les résultats de cette détection. Ce circuit de détection peut comprendre par exemple des organes internes au boîtier susceptibles de réagir directement aux signaux émis par l'unité centrale, par exemple une boucle de détection de champ électromagnétique.

Dans ces conditions le circuit de détection pourra alors servir de circuit de réveil permettant de mettre en marche l'ensemble du boîtier; ce circuit fonctionnant lui-même avec un très faible niveau d'énergie pour éviter de drainer la source d'alimentation du boîtier. Ce circuit peut également être relié par des liaisons directes, non représentées, aux différents organes 106 à 108, de manière à recevoir de ceux-ci les signaux provenant de l'unité centrale à laquelle le boîtier doit être relié. Ces signaux, en actionnant l'organe de réception auquel ils sont adaptés, indiquent alors le type de liaison à utiliser.

Dans ce cas particulièrement intéressant, le microprocesseur 110, activé par le réveil du boîtier sous l'effet du circuit de détection 112, pourra ainsi déterminer dans un premier temps le type de liaison à utiliser et adresser à la carte à puce un signal indiquant la nature de cette liaison. Si la carte à puce alors en place dans le boîtier n'est pas adaptée à ce type de liaison, aucune transaction ne sera possible. On peut dans ce cas prévoir un moyen d'alerte, un vibreur ou une diode électroluminescente par exemple, qui seront contenus dans le boîtier et activés par le microprocesseur lors de la détection de cette incompatibilité, pour permettre d'alerter le porteur du boîtier. Dans ce cas le circuit de détection est double en ce sens qu'il cherche si un type de liaison est acceptable à la fois par l'unité centrale et par la carte à puce.

Si la carte à puce comporte une application compatible avec le type de liaison ainsi déterminé, celle-ci sera activée en étant au préalable sélectionnée si elle fait partie de plusieurs applications distinctes dédiées à des types de liaison distincts.

La liaison physique avec l'unité centrale sera alors possible et les échanges de signaux ultérieurs permettront ensuite au dialogue entre la carte à puce et l'unité centrale de s'établir, si cela est possible en fonction de la compatibilité des applications de la carte et de l'unité centrale, et du bon déroulement du processus de reconnaissance lié aux protections éventuels.

En prenant l'exemple d'une liaison entre télécopieurs, le premier niveau de reconnaissance correspondra à l'établissement de la liaison téléphonique, le deuxième niveau à l'échange des porteuses caractéristiques des télécopieurs, et les niveaux ultérieurs à l'échange des protocoles permettant de définir les groupes, les vitesses de transmission etc. L'invention correspond donc ici à la possibilité d'établir automatiquement la liaison physique adéquate, et la sélection des autres niveaux est connue en elle-même.

Outre ces deux manières de reconnaître le type de liaison que le boîtier doit prendre en compte, c'est à dire le forçage de la configuration par la carte elle-même et la détection automatique à partir des signaux reçus depuis l'unité centrale, éventuellement dans le cadre d'une fonction réveil, un mode de réalisation de l'invention propose également de munir le boîtier d'au moins une touche, non représentée sur la figure, de type mécanique ou sensitif par exemple, permettant à un opérateur d'indiquer manuellement directement au boîtier le type de liaison à utiliser. Avantageusement l'action sur cette touche permettra de lancer le fonctionnement du boîtier, assurant ainsi la fonction réveil, ce qui permet d'économiser la source d'énergie. Cette manière de faire offrira notamment comme avantage une accélération de la mise en oeuvre de la liaison. En effet la détection directe des signaux reçus de l'unité centrale n'est pas toujours très rapide, ni même très sûre, et dans ce cas on est conduit à programmer le microprocesseur 110 de manière à ce qu'il effectue un balayage des différentes possibilités de liaisons, avec à chaque fois un test qui peut être relativement long sur l'existence ou non de signaux provenant de l'unité centrale, éventuellement en réponse aux signaux émis par le boîtier lui-même. En appuyant alors sur le bouton correspondant à la fonction qu'il désire utiliser, l'utilisateur lance directement la procédure d'échange de signaux avec l'unité centrale à proximité de laquelle il se trouve.

Lorsque la transaction est finie, le microprocesseur 110 détecte la fin de cette transaction et peut alors commander la mise en sommeil du boîtier, hormis celle du circuit de détection 112 bien entendu, jusqu'à la prochaine détection d'une demande de transaction. Cette mise en sommeil peut s'effectuer avec une temporisation variable destinée à éviter des coupures intempestives de liaison.

En outre, le microprocesseur 110 peut également être programmé pour n'autoriser le fonctionnement du boîtier que lorsque la carte à puce 102 est mise en place dans ce boîtier. Cette détection peut se faire de différentes manières, par exemple à l'aide d'un interrupteur actionné de manière mécanique lors de la mise en place de la carte à puce, ou bien par détection électrique au niveau des contacts d'alimentation de la puce 104.

## Revendications

1. Dispositif portable (100) pour mise en liaison fonctionnelle d'une carte (102) à puce (104) avec une unité centrale (103), comportant un boîtier (101) destiné à recevoir la carte à puce, des moyens (111) pour permettre à ce boîtier d'une part de dialoguer avec la puce de la carte et d'autre part d'établir une liaison entre le boîtier et l'unité centrale pour mettre la puce de la carte en liaison fonctionnelle avec cette unité centrale, ce dispositif comporte en outre :
- des moyens de liaison (105 - 108, 115 - 118) entre le boîtier et l'unité centrale appartenant à au moins deux types de liaison physique différents;
- des moyens de détection (110, 112) pour reconnaître le type de liaison physique permettant de mettre en communication la carte à puce et l'unité centrale (103) en fonction d'une application contenue dans la carte à puce (102), ces moyens de détection (110, 112) étant adaptés pour lire dans la puce (104) de la carte (102) une information déterminant le type de liaison physique à utiliser; et
- des moyens d'aiguillage (110) pour sélectionner les moyens de liaison (105-108, 115-118) correspondant au type de liaison physique ainsi détecté.

2. Dispositif selon la revendication 1, caractérisé en ce que les moyens de détection (110, 112) permettent de détecter les signaux émis par l'unité centrale (103) pour déterminer le type de liaison physique à utiliser, compte tenu des informations correspondant à ce type de liaison physique éventuellement contenues dans la puce (104) de la carte (102).

3. Dispositif selon la revendication 2, caractérisé en ce que les moyens d'aiguillage (110) permettent de commander la mise en sommeil du boîtier afin de limiter sa consommation d'énergie, et que les moyens de détection (112) permettent d'activer les moyens de sélection (110) pour remettre en service le boîtier lors de la détection du signal provenant de l'unité centrale (103).

4. Dispositif selon l'une quelconque des revendications 1 à 3, caractérisé en ce qu'il comprend au moins un organe de commande permettant de sélectionner manuellement le type de liaison (115-118) à utiliser.

5. Dispositif selon l'une quelconque des revendications 1 à 4, caractérisé en ce que les moyens de sélection (110) permettent de détecter la présence de la carte à puce (102) dans le boîtier, afin de n'autoriser le fonctionnement du boîtier que si cette carte à puce est présente.

6. Dispositif selon l'une quelconque des revendications 1 à 5, caractérisé en ce qu'il comporte un dispositif d'alerte pour signaler une incompatibilité entre un type de liaison à sélectionner et une application.

## Patentansprüche

1. Tragbare Vorrichtung (100) um eine Chipkarte (102) mit einer Zentraleinheit (103) funktionell zu verbinden, umfassend ein Gehäuse (101), das dazu bestimmt ist, die Chipkarte aufzunehmen, Mittel (111), welche es dem Gehäuse einerseits gestatten, mit dem Chip der Karte einen Dialog zu halten, und andererseits eine Verbindung zwischen dem Gehäuse und der Zentraleinheit zu errichten, um den Chip der Karte in funktionelle Verbindung mit der Zentraleinheit zu bringen, wobei diese Vorrichtung außerdem umfasst:
- Verbindungsmittel (105-108, 115 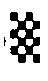 118) zwischen dem Gehäuse und der Zentraleinheit, welche zu zumindest zwei unterschiedlichen Arten von physischer Verbindung gehören;
- Erfassungsmittel (110, 112) zur Erkennung der Art der physischen Verbindung, die es gestattet, die Chipkarte und die Zentraleinheit (103) abhängig von einer auf der Chipkarte (102) enthaltenen Anwendung in Kommunikationsverbindung zu bringen, wobei die Erfassungsmittel (110, 112) angepasst sind zum Lesen einer Information auf dem Chip (104) der Karte (102), welche die Art von zu verwendender physischer Verbindung bestimmt; und
- Weichenmittel (110) zur Auswahl der Verbindungsmittel (105, 108, 115 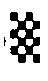 118), die der so erkannten Art von physischer Verbindung entsprechen.

2. Vorrichtung nach Anspruch 1, dadurch **gekennzeichnet, dass** die Erfassungsmittel (110, 112) es gestatten, die von der Zentraleinheit (103) abgegebenen Signale zu erfassen, um die Art der zu verwendenden physischen Verbindung zu bestimmen, unter Berücksichtigung der Informationen, welche dieser Art von physischer Verbindung entsprechen und eventuell in dem Chip (104, 102) enthalten sind.

3. Vorrichtung nach Anspruch 2, dadurch **gekennzeichnet, dass** die Weichenmittel (110) es gestatten, das Gehäuse in einen Schlafzustand zu versetzen, um den Energieverbrauch zu begrenzen, und dass die Erfassungsmittel (112) es gestatten, die Auswahlmittel (110) zu aktivieren, um das Gehäuse bei der Erfassung des aus der Zentraleinheit (103) stammenden Signals wieder in Betrieb zu nehmen.

4. Vorrichtung nach einem der Ansprüche 1 bis 3, dadurch **gekennzeichnet, dass** sie mindestens eine Steuereinrichtung umfasst, welche es gestattet, manuell die Art der zu verwendenden Verbindung (115 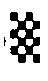 118) zu wählen.

5. Vorrichtung nach einem der Ansprüche 1 bis 4, dadurch **gekennzeichnet, dass** die Auswahlmittel (110) es gestatten, das Vorhandensein der Chipkarte (102) in dem Gehäuse zu erfassen, um den Betrieb des Gehäuses nur dann zu genehmigen, wenn die Chipkarte vorliegt.

6. Vorrichtung nach einem der Ansprüche 1 bis 5, dadurch **gekennzeichnet, dass** sie eine Alarmvorrichtung umfasst, um eine Inkompatibilität zwischen einer zu wählenden Art von Verbindung und einer Anwendung signalisiert.

## Claims

1. Portable device (100) to put a card (102) with chip (104) into functional connection with a central unit (103), comprising a box (101) designed to receive the chip card, means (111) enabling this box on the one hand to dialogue with the chip of the card and on the other hand to establish connection between the box and the central unit to put the chip of the card into functional connection with this central unit, the device also comprising:
- means of connection (105-108, 115-118) between the box and the central unit, belonging to at least two different types of physical connection;
- means of detection (110, 112) to recognize the type of physical connection enabling the chip card and the central unit (103) to be put into communication as a function of an application contained in the chip card (102), these means of detection (110, 112) being adapted to read in the chip (104) of the card (102) information determining the type of physical connection to be used; and
- means of selection (110) to select the means of connection (105-108, 115-118) corresponding to the type of physical connection detected in this way.

2. Device according to Claim 1, characterized in that the means of detection (110, 112) enable the signals emitted by the central unit (103) to be detected in order to determine the type of physical connection to be used, taking into account information corresponding to this type of physical connection possibly contained in the chip (104) of the card (102).

3. Device according to Claim 2, characterized in that the means of selection (110) enable the box to be commanded to go into «sleep» mode in order to limit its energy consumption and that the means of detection (112) allow the means of selection (110) to be activated to put the box back into service when the signal emitted by the central unit (103) is detected.

4. Device according to any one of Claims 1 to 3, characterized in that it includes at least one command organ enabling the type of connection (115-118) to be used to be selected manually.

5. Device according to any one of Claims 1 to 4, characterized in that the means of selection (110) permit the presence of the chip card (102) to be detected in the box so that the box will only be authorized to function if this chip card is present.

6. Device according to any one of Claims 1 to 5, characterized in that it comprises an alarm device to signal any incompatibility between a type of connection to be selected and an application.
